# NOUVEAU FASCICULE DE BREVET EUROPEEN

(11) **EP 0 361 993 B2**
(45) Date de publication et mention de la décision concernant l'opposition: **14.08.1996**
(45) Mention de la délivrance du brevet: 20.01.1993
(21) Numéro de dépôt: 89402295.3
(22) Date de dépôt: 17.08.1989
(51) Int. Cl.: H02J 13/00, H05B 37/02, G08C 15/00

(54) **Système de télécommande, notamment d'éclairage, dans des locaux incorporant des zones de distribution commandables à conformations variables**
Fernsteuerung, insbesondere für die Beleuchtung in Räumen, die Verteilungszonen mit verstellbaren Konfigurationen umfassen
Remote control system, especially for lighting, in spaces incorporating controllable distribution zones with a variable configuration

(30) Priorité: 20.09.1988 FR 8812239
(43) Date de publication de la demande: 04.04.1990
(73) Titulaire: TELEMECANIQUE, F-92504 Rueil Malmaison Cedex (FR)
(72) Inventeur: Conil, Jean-Pierre, F-21600 Longvic (FR); Pierrot, Henri, F-21600 Longvic (FR)
(74) Mandataire: de Saint-Palais, Arnaud Marie

(56) Documents cités:
- EP-A- 0 069 470
- WO-A-88/02583
- DE-A- 3 514 334
- FR-A- 2 535 133
- US-A- 4 173 754
- US-A- 4 200 862
- US-A- 4 215 276
- US-A- 4 418 333
- US-A- 4 589 075

## Description

La présente invention concerne un système de télécommande, notamment d'éclairage, dans des locaux industriels ou du domaine tertiaire incorporant des zones de distribution commandables pouvant être créées, modifiées ou supprimées au gré de l'utilisateur.

Dans un système de commande par zones d'appareils d'utilisation tels que des rampes d'éclairage, il est connu d'installer, dans chaque zone à commander du local, un ou plusieurs émetteurs qui commandent, par des signaux codés transmis sur un Bus, un groupe de récepteurs eux-mêmes commandant les rampes d'éclairage.

Afin d'assurer la commande des récepteurs associés aux diverses zones du local, en général, on code la même adresse à la fois sur tous les récepteurs de la même zone à commander et sur le ou les émetteurs correspondants, cette adresse étant différente d'une zone à l'autre.

Toutefois, un adressage identique codé sur les récepteurs et émetteur(s) d'une même zone à commander n'est pas particulièrement bien adapté dans le cas de locaux dits "à géométrie variable" dans lesquels les pièces sont délimitées par des cloisons amovibles que l'utilisateur peut déplacer en fonction de ses besoins. En effet, à chaque déplacement de cloison, il faut intervenir sur tous les récepteurs concernés par ce déplacement pour changer leur adresse, lesquels récepteurs concernés peuvent être en grand nombre, ce qui augmente notablement le temps d'intervention.

La présente invention a pour but de remédier à cet inconvénient et de réaliser un système de télécommande, notamment d'éclairage, dans des locaux incorporant des zones de distribution commandables à conformations variables, permettant des opérations de reconfiguration de zone qui soient simples et rapides à exécuter.

A cet effet, le système de télécommande selon l'invention, du type comportant :
- une ligne de transmission commune à toutes les zones à commander ;
- une pluralité de récepteurs locaux répartis dans les zones à commander et raccordés à la ligne de transmission, chaque récepteur étant équipé de moyens de codage d'une propre adresse de récepteur et de moyens de commande d'appareils d'utilisation, le codage des adresses des récepteurs étant différent d'une zone à l'autre ;
- une pluralité de dispositifs d'émission, connectés à la ligne de transmission et commandant chacun les récepteurs d'une même zone à commander sous l'action d'un organe de commande relié à chaque dispositif d'émission.
est caractérisé par le fait que :
- les adresses des récepteurs d'une même zone à commander sont codées différemment les unes des autres suivant un ordre fixe préétabli et de façon définitive dès leur mise en place ;
- les dispositifs d'émission comportent chacun des premiers moyens de codage des adresses des récepteurs de la zone correspondante à commander.

Ainsi, les adresses des récepteurs son figées de manière définitive dès la mise en place de ceux-ci dans le local, de sorte qu'en cas de modification des zones, il suffit désormais d'intervenir uniquement au niveau des dispositifs d'émission pour en changer les adresses des récepteurs concernés.

Dans une première forme de réalisation, les dispositifs d'émission sont constitués chacun par un ou plusieurs émetteurs locaux associés aux récepteurs de la zone correspondante à commander et équipés desdits premiers moyens de codage, chaque émetteur local étant actionné par l'organe de commande et délivrant un signal de transmission apte à être détecté par les récepteurs de la zone correspondante à commander.

Ainsi, en cas de modification des zones, on n'intervient que sur les émetteurs locaux, lesquels émetteurs sont nettement moins nombreux que les récepteurs, d'où une réduction du temps d'intervention.

Dans une variante d'exécution, les dispositifs d'émission :
- comportent chacun un ou plusieurs émetteurs locaux associés aux récepteurs de la zone correspondante à commander et équipés de seconds moyens de codage d'une propre adresse d'émetteur, chaque émetteur local étant actionné par l'organe de commande et délivrant un premier signal de transmission ;
- et ont en commun une unité centrale programmable reliée à la ligne de transmission et seule apte à détecter et à traiter le premier signal de transmission fourni par chaque émetteur local, cette unité comprenant lesdits premiers moyens de codage sous la forme d'une table de correspondance entre chaque adresse d'émetteur et les adresses des récepteurs qui lui sont associés dans la zone correspondante à commander, de manière à ce que l'unité délivre un second signal de transmission apte à être détecté par les récepteurs de la zone correspondante à commander.

Ainsi, en cas de modification des zones dans le local, on n'intervient ici que sur la programmation de la table de correspondance de l'unité centrale, d'où également une réduction du temps d'intervention.

Suivant une particularité de l'invention, les moyens de codage appartenant à chaque émetteur local assurent:
- dans le cadre de la première forme de réalisation mentionnée précédemment (système sans unité centrale), d'une part, le codage de l'adresse du premier récepteur de la zone correspondante à commander et, d'autre part, le codage de l'adresse du dernier récepteur de ladite zone ;
- dans le cadre de la variante d'exécution indiquée précédemment (système avec unité centrale), d'une part, le codage de l'adresse de l'émetteur et, d'autre part, le codage d'une valeur prédéterminée non utilisée comme adresse de récepteur.

On comprend que, par une simple adaptation des moyens de codage associés à chaque émetteur local, il est possible, en utilisant les mêmes produits émetteurs et récepteurs locaux, de faire évoluer d'une manière aisée le système de télécommande selon l'invention d'un fonctionnement sans unité centrale vers un fonctionnement avec unité centrale.

D'autres caractéristiques et avantages de l'invention apparaîtront mieux dans la description détaillée qui suit et se réfère aux dessins annexés donnés uniquement à titre d'exemple et dans lesquels :
La figure 1 est un schéma synoptique d'un exemple de réalisation d'un système de télécommande d'éclairage conforme à l'invention ;
La figure 2 est une variante du système de télécommande d'éclairage ; et
Les figures 3 et 4 représentent partiellement la forme schématique du signal de transmission émis par chaque émetteur local illustré sur la figure 1 et respectivement sur la figure 2.

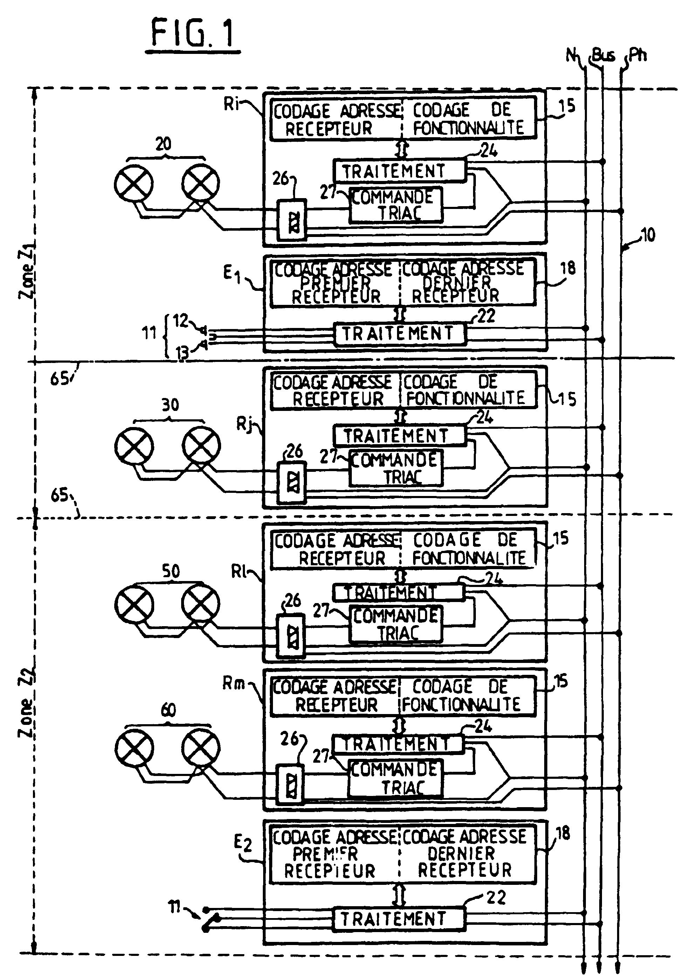

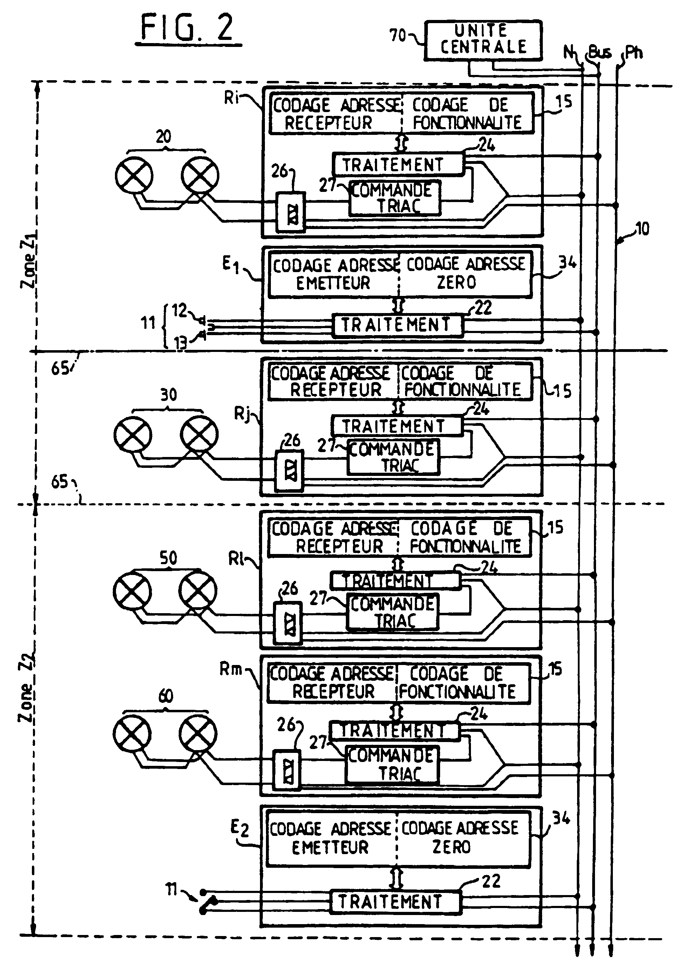

Sur les figures 1 et 2, les mêmes références se rapportent aux mêmes éléments qui remplissent les mêmes fonctions en vue des mêmes résultats.

Dans un exemple de réalisation préféré représenté sur la figure 1, le système de télécommande conforme à l'invention est utilisé pour la commande d'éclairage dans des locaux industriels ou du domaine tertiaire incorporant des zones de distribution commandables, dont deux seulement (notées Z₁ et Z₂) ont été représentées sur cette figure 1 et ceci à titre purement illustratif et nullement limitatif, ayant des configurations qui peuvent être modifiées au gré de l'utilisateur ; à titre d'exemple, ces zones constituent des bureaux à cloisons amovibles.

Comme le montre la figure 1, le système de télécommande d'éclairage comprend une ligne de transmission 10 commune aux deux zones à commander Z₁ et Z₂, et alimentée par le secteur 220 volts alternatifs. Dans cet exemple, la ligne 10 comprend trois conducteurs relativement rigides, à savoir:
- un conducteur de phase Ph,
- un conducteur de transmission Bus servant à véhiculer les signaux de transmission par courants porteurs et étant connecté au secteur 220 volts alternatifs par l'intermédiaire d'un filtre (non figuré) présentant une haute impédance à la fréquence du signal de transmission, et
- un conducteur de neutre N.

La ligne de transmission 10 est de préférence, constituée par une canalisation électrique préfabriquée comportant, de façon classique, une goulotte tubulaire métallique dont le corps constitue la masse et dans laquelle les trois conducteurs actifs tels que définis ci-dessus s'étendent longitudinalement et sont maintenus par des isolateurs.

Dans cet exemple de réalisation, figure 1, il est prévu dans la zone à commander Z₁ un émetteur local E₁ connecté è la ligne de transmission 10 et auquel est relié par trois fils un organe de commande Il constitué par exemple par deux boutons poussoirs 12 et 13, respectivement de fermeture et d'ouverture, ainsi que deux récepteurs locaux, notés Rᵢ et Rⱼ, raccordés à la ligne de transmission 10 et destinés chacun à commander, sur ordre de l'émetteur E₁, des appareils d'éclairage 20, respectivement 30, au nombre de deux dans l'exemple choisi en étant montés en série et connectés en sortie du récepteur correspondant.

De même, il est prévu dans la zone à commander Z₂ un émetteur local E₂ connecté à la ligne de transmission 10 et auquel est relié par trois fils l'organe de commande 11 constitué ici par un contact type va-et-vient, ainsi que deux récepteurs locaux, notés Rₗ et Rₘ, raccordés à la ligne de transmission 10 et destinés à commander chacun, sur ordre de l'émetteur E₂, deux appareils d'éclairage en série 50, respectivement 60.

Il convient de noter que le nombre d'émetteurs, de récepteurs et d'appareils d'éclairage peut, d'une part, être différent d'une zone à l'autre et, d'autre part, être quelconque dans une même zone à commander, étant entendu qu'en règle générale, le nombre d'émetteurs est inférieur à celui des récepteurs dans une même zone ; par ailleurs, il est possible d'avoir plusieurs émetteurs qui commandent le même groupe de récepteurs dans une même zone.

Suivant une caractéristique de l'invention, chaque récepteur local présente des moyens permettant de coder une adresse de récepteur, sous forme numérique par exemple à 8 bits, qui est figée de manière définitive conformément à un ordre préétabli au moment de l'installation des récepteurs et qui est différente d'un récepteur à l'autre tant dans une même zone à commander que d'une zone à l'autre. De préférence, les numéros d'adresse des récepteurs sont codés de façon consécutive dans une même zone à commander et d'une zone à l'autre.

Ainsi, dans l'exemple de réalisation illustré sur la figure 1, les récepteurs Rᵢ, Rⱼ de la zone Z₁ et Rₗ, Rₘ de la zone Z₂ possèdent des numéros d'adresse respectifs, que l'on désignera par i, j et respectivement I, m (chaque numéro d'adresse de récepteur pouvant aller de 1 à 255), qui sont codés chacun par des moyens de codage 15 suivant un ordre fixe consécutif i, j, l, m avec i ≠ j ≠ l ≠ m.

Toujours dans cet exemple, chaque émetteur local E₁, E₂ présente des moyens 18 permettant de coder les numéros d'adresse des récepteurs qu'il doit commander dans la zone considérée. De préférence, ces moyens de codage 18 assurent, d'une part, le codage du numéro d'adresse du premier récepteur de la zone correspondante à commander et, d'autre part, le codage du numéro d'adresse du dernier récepteur de ladite zone : dans le cas particulier de la figure 1, les numéros d'adresse respectifs i et j des deux récepteurs Rᵢ et Rⱼ de la zone Z₁ sont codés sur l'émetteur E₁, tandis que les numéros d'adresse respectifs I et m des deux récepteurs Rₗ et Rₘ de la zone Z₂ sont codés sur l'émetteur E₂.

L'encodage tel que décrit ci-dessus à propos des émetteurs E₁, E₂ et des récepteurs Rᵢ, Rⱼ, Rₗ, Rₘ peut être réalisé au moyen de divers dispositifs connus tels que, par exemple, des roues codeuses ou des étiquettes.

Suivant l'ordre de fermeture (allumage des appareils d'éclairage) ou d'ouverture (extinction des appareils d'éclairage) donné par l'organe de commande 11 à chacun des émetteurs locaux E₁, E₂, chaque émetteur E₁, E₂ met en forme cet ordre au moyen d'un circuit de traitement 22 en dualité avec les moyens de codage d'adresse 18 pour émettre sur le conducteur Bus de la ligne 10 un signal de transmission du type par exemple modulé en amplitude qui est ensuite reçu par chacun des récepteurs de la zone concernée, en l'occurrence les récepteurs Rᵢ et Rⱼ commandés par l'émetteur E₁ dans la zone Z₁ et les récepteurs Rₗ et Rₘ commandés par l'émetteur E₂ dans la zone Z₂.

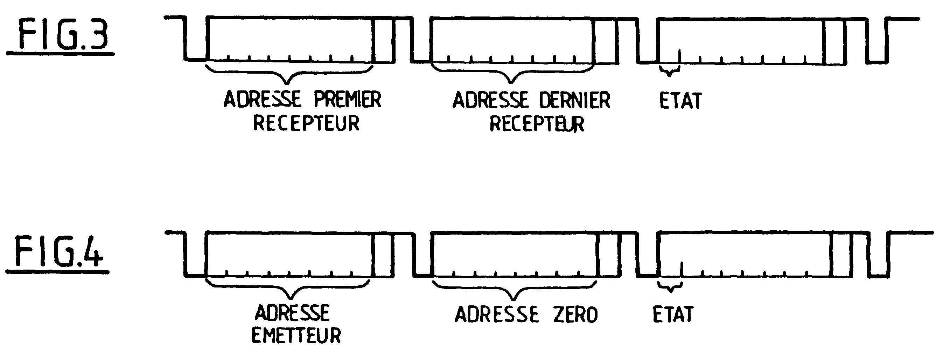

Sur la figure 3, on a représenté partiellement la forme de base du signal de transmission émis par l'émetteur E₁ ou E₂. De manière succincte, ce signal comprend notamment 8 bits de données correspondant au numéro d'adresse du premier récepteur concerné dans la zone à commander, en l'occurence i ou I dans l'exemple choisi, ainsi que 8 bits de données correspondant au numéro d'adresse du dernier récepteur concerné dans ladite zone, en l'occurence j ou m dans cet exemple, et un bit de donnée correspondant à l'état de fermeture (allumage) ou d'ouverture (extinction) fourni à l'émetteur.

La forme physique de ce signal de transmission émis sur le conducteur Bus est par exemple définie, d'une part, par un bit "1" qui est représenté par une absence de signal et, d'autre part, par un bit "0" qui est représenté par une émission d'une oscillation à une fréquence déterminée, superposée au secteur.

Dans la zone à commander Z₁ ou Z₂, chacun des récepteurs locaux concernés, à savoir dans l'exemple choisi Rᵢ, Rⱼ dans la zone Z₁ ou Rₗ, Rₘ dans la zone Z₂, détecte au moyen d'un circuit de traitement 24 en dualité avec les moyens de codage d'adresse 15 le signal de transmission illustré à la figure 3 et commande, par exemple au moyen d'un triac 26 commandé par un circuit de commande 27 relié au circuit de traitement 24, l'allumage ou l'extinction des appareils d'éclairage 20, 30 dans la zone Z₁ ou 50, 60 dans la zone Z₂ selon l'ordre donné d'allumage ou d'extinction.

En cas de modification de l'une des deux zones Z₁, Z₂ relevant, par exemple dans des bureaux à cloisons amovibles, d'un déplacement d'une cloison 65 (figure 1) de sa position initiale illustrée par des tirets vers une position illustrée par des traits mixtes, l'utilisateur intervient uniquement sur les émetteurs locaux E₁ et E₂ pour modifier le codage des numéros d'adresse des premier et dernier récepteurs concernés par ce déplacement de la cloison 65 ; dans cet exemple, sur l'émetteur E₁, il suffit de changer seulement le codage du numéro d'adresse du dernier récepteur concerné, lequel numéro d'adresse est désormais i, tandis que sur l'émetteur E2, seul est à changer le codage du numéro d'adresse du premier récepteur concerné, lequel numéro d'adresse est dorénavant j.

Par ailleurs, il convient de noter que les moyens de codage 15 appartenant à chaque récepteur local Rᵢ, Rⱼ, Rₗ, Rₘ peuvent également assurer un codage de fonctionnalités complémentaires du récepteur telles que, par exemple, le choix de l'état (actif ou inactif) que prend la sortie du récepteur correspondant à la mise sous tension.

Dans la variante d'exécution illustrée à la figure 2, chaque émetteur local E₁, E₂ présente des moyens de codage 34 assurant, d'une part, le codage d'un numéro d'adresse d'émetteur, que l'on désignera par α pour E₁ et β pour E₂ et, d'autre part, le codage d'une adresse de valeur prédéterminée non utilisée comme adresse de récepteur ; de préférence, cette valeur prédéterminée d'adresse est choisie égale à zéro.

Dès lors, suivant l'ordre de fermeture (allumage) ou d'ouverture (extinction) donné par l'organe de commande Il à chacun des émetteurs locaux E₁, E₂, chaque émetteur E₁, E₂ émet sur le conducteur Bus de la ligne 10 un signal de transmission qui contient notamment, comme illustré à la figure 4, 8 bits de données représentant l'adresse de l'émetteur correspondant, en l'occurence α ou β dans l'exemple choisi, 8 bits de données représentant l'adresse zéro et un bit de donnée correspondant à l'état d'allumage ou d'extinction fourni à l'émetteur.

Etant donné que les récepteurs locaux Rᵢ, Rⱼ, Rₗ, Rₘ ont tous des numéros d'adresse respectifs i, j, I, m supérieurs à zéro, le signal de transmission illustré à la figure 4 et contenant l'adresse zéro n'est traité par aucun des récepteurs locaux.

Dans cette variante, une unité centrale programmable 70 commune aux deux zones à commander Z₁ et Z₂ est connectée à la ligne de transmission 10, entre les conducteurs N et Bus de celle-ci, et est conçue de manière à pouvoir détecter le signal de transmission émis par chaque émetteur E₁, E₂.

Cette unité centrale 70 possède une table de correspondance entre chaque numéro d'adresse d'émetteur et les numéros d'adresse des récepteurs qui lui sont associés dans la zone à commander correspondante ; dans cet exemple de la figure 2, l'unité centrale 70 gère la correspondance sous forme codée entre le numéro d'adresse α de l'émetteur E₁ et les numéros d'adresse i, j des deux récepteurs Rᵢ, Rⱼ concernés dans la zone Z₁ d'une part, le numéro d'adresse β de l'émetteur E₂ et les numéros d'adresse l, m des deux récepteurs Rₗ, Rₘ concernés dans la zone Z₂ d'autre part.

L'unité centrale 70, figure 2, joue en quelque sorte le rôle d'émetteur/récepteur, en ce sens qu'elle comprend des moyens aptes à détecter le signal de transmission émis par chaque émetteur local E₁, E₂, ainsi que des moyens aptes à émettre, en fonction de sa table de correspondance, un autre signal de transmission approprié qui est reçu et traité par les récepteurs locaux concernés afin de commander, selon l'ordre donné, l'allumage ou l'extinction des appareils d'éclairage 20, 30 dans la zone Z₁ ou 50, 60 dans la zone Z₂.

En cas de modification de l'une des deux zones Z₁, Z₂ relevant, comme dans le mode de réalisation précédent, d'un déplacement de la cloison 65 de sa position initiale illustrée par des tirets sur la figure 2 vers une position illustrée par des traits mixtes sur cette même figure, l'installateur intervient uniquement sur la table de correspondance de l'unité centrale 70 pour modifier, à l'aide d'un terminal, la correspondance des numéros d'adresse des émetteurs et récepteurs concernés parce déplacement de la cloison 65 ; dans cet exemple, les modifications à apporter consistent à faire correspondre, d'une part, le numéro d'adresse α de l'émetteur E₁ avec le numéro d'adresse i du récepteur Rᵢ et, d'autre part, le numéro d'adresse β de l'émetteur E₂ avec les numéros d'adresse respectifs j, l, m des récepteurs Rⱼ, Rₗ, Rₘ.

Il convient d'ajouter que l'unité centrale 70 peut également gérer des fonctionnalités complémentaires qui lui sont fournies par des organes externes de commande tels que, par exemple, un capteur de niveau d'éclairement pour une commande automatique des récepteurs en fonction de la luminosité extérieure, ou dialoguer avec un réseau de transmission de niveau supérieur.

On indiquera qu'un avantage important de l'invention réside dans le fait qu'il est facile d'évoluer, avec les mêmes produits émetteurs et récepteurs locaux, du système de télécommande décrit dans le premier mode de réalisation vers le système de télécommande mettant en oeuvre l'unité centrale 70 selon la variante : pour cela, il suffit simplement de coder, sur chaque émetteur local, l'adresse de l'émetteur et l'adresse zéro à la place respectivement de l'adresse du premier récepteur commandé et de l'adresse du dernier récepteur commandé. De plus, il est également possible de faire coexister sur la même ligne de transmission les émetteurs codés selon le premier mode de réalisation et les émetteurs codés pour dialoguer avec l'unité centrale 70 selon la variante.

On notera que le système de télécommande selon l'invention a été décrit ci-dessus dans le cadre particulier d'une commande d'éclairage dans des locaux industriels ou du domaine tertiaire ; bien sûr, l'invention s'applique également à tout autre type de commande, comme par exemple une commande de régulation de chauffage ou encore une commande de délestage, voire un automatisme industriel.

## Revendications

1. Système de télécommande, notamment d'éclairage, dans des locaux incorporant des zones de distribution commandables à conformations variables, comportant :
- une ligne de transmission (10) commune à toutes les zones à commander (Z₁, Z₂) ;
- une pluralité de récepteurs locaux (Rᵢ, Rⱼ, Rₗ, Rₘ) répartis dans les zones à commander et raccordés à la ligne de transmission (10), chaque récepteur étant équipé de moyens de codage (15) d'une propre adresse de récepteur et de moyens de commande (26) d'appareils d'utilisation (20, 30, 50, 60), le codage des adresses des récepteurs étant différent d'une zone à l'autre ;
- une pluralité de dispositifs d'émission (E₁, E₂, 70) connectés à la ligne de transmission (10) et commandant chacun les récepteurs d'une même zone à commander sous l'action d'un organe de commande (11) relié à chaque dispositif d'émission,
caractérisé par le fait que :
- les adresses des récepteurs (Rᵢ, Rⱼ, Rₗ, Rₘ) d'une même zone à commander (Z₁, Z₂) sont codées différemment les unes des autres suivant un ordre fixe préétabli et de façon définitive dès leur mise en place ;
- les dispositifs d'émission (E₁, E₂, 70) comportent chacun des premiers moyens de codage (18) des adresses des récepteurs de la zone correspondante commander.

2. Système de télécommande selon la revendication 1,
caractérisé par le fait que les dispositifs d'émission sont constitués chacun par un ou plusieurs émetteurs locaux (E₁ ; E₂) associés aux récepteurs (Rᵢ, Rⱼ ; Rₗ, Rₘ) de la zone correspondante à commander (Z₁ ;Z₂) et équipés desdits premiers moyens de codage (18), chaque émetteur local étant actionné par l'organe de commande (11) et délivrant un signal de transmission apte à être détecté par les récepteurs de la zone correspondante à commander.

3. Système de télécommande selon la revendication 2,
caractérisé par le fait que les premiers moyens de codage (18) appartenant à chaque émetteur local (E₁ ; E₂) assurent, d'une part, le codage de l'adresse du premier récepteur (Rᵢ ; Rₗ) de la zone correspondante à commander (Z₁ ; Z₂) et, d'autre part, le codage de l'adresse du dernier récepteur (Rⱼ ; Rₘ) de ladite zone (Z₁ ; Z₂).

4. Système de télécommande selon l'une des revendications 2 ou 3,
caractérisé par le fait que les adresses des récepteurs (Rᵢ, Rⱼ ; Rₗ, Rₘ) sont codées de façon consécutive dans une même zone à commander et d'une zone à l'autre.

5. Système de télécommande selon la revendication 1,
caractérisé par le fait que les dispositifs d'émission :
- comportent chacun un ou plusieurs émetteurs locaux (E₁ ; E₂) associés aux récepteurs (Rᵢ, Rⱼ ; Rₗ, Rₘ) de la zone correspondante à commander (Z₁ ; Z₂) et équipés de seconds moyens de codage (34) d'une propre adresse d'émetteur, chaque émetteur local étant actionné par l'organe de commande (11) et délivrant un premier signal de transmission ;
- et ont en commun une unité centrale programmable (70) reliée à la ligne de transmission (10) et seule apte à détecter et à traiter le premier signal de transmission fourni par chaque émetteur local, cette unité comprenant lesdits premiers moyens de codage (18) sous la forme d'une table de correspondance entre chaque adresse d'émetteur et les adresses des récepteurs qui lui sont associés dans la zone correspondante à commander, de manière à ce que l'unité délivre un second signal de transmission apte à être détecté par les récepteurs de la zone correspondante à commander.

6. Système de télécommande selon la revendication 5,
caractérisé par le fait que les seconds moyens de codage (34) appartenant à chaque émetteur local (E₁ ; E₂) assurent, d'une part, le codage de l'adresse de l'émetteur (E₁ ; E₂) et, d'autre part, le codage d'une valeur prédéterminée non utilisée comme adresse de récepteur.

7. Système de télécommande selon la revendication 6, dans lequel les récepteurs locaux (Rᵢ, Rⱼ, Rₗ, Rₘ) ont tous une adresse codée supérieure à zéro,
caractérisé par le fait que la valeur prédéterminée codée sur chaque émetteur local (E₁ ; E₂) est égale à zéro.

8. Système de télécommande selon l'une des revendications 1 à 7,
caractérisé par le fait que les moyens de codage (15) appartenant à chaque récepteur local (Rᵢ ; Rⱼ ; Rₗ ; Rₘ) assurent, d'une part, le codage de l'adresse du récepteur (Rᵢ ; Rⱼ ; Rₗ ; Rₘ) et, d'autre part, le codage d'au moins une fonctionnalité complémentaire du récepteur.

## Patentansprüche

1. Fernsteuerung, insbesondere für die Beleuchtung in Räumen, die steuerbare Verteilerzonen mit verstellbaren Konfigurationen umfassen, mit :
- einer für alle zu steuernden Zonen (Z₁, Z₂) gemeinsamen Übertragungsleitung (10),
- einer Vielzahl von, über die zu steuernden Zonen verteilten, an die Übertragungsleitung (10) angeschlossenen lokalen Empfängern (Rᵢ, Rⱼ, Rₗ, Rₘ), wobei jeder Empfänger mit Mitteln (15) zur Kodierung einer empfängereigenen Adresse versehen ist und mit Mitteln (26) zur Steuerung von Benutzergeräten (20, 30, 50, 60) und die Kodierung der Empfängeradressen von einer Zone zur anderen verschieden ist,
- einer Vielzahl von an die Übertragungsleitung (10) angeschlossenen Sendevorrichtungen (E₁, E₂, 70), die jeweils die Empfänger einer bestimmten zu steuernden Zone steuern und der Wirkung eines an die jeweilige Sendevorrichtung angeschlossenen Steuerorgans (11) unterworfen sind,
dadurch gekennzeichnet, dass :
- die Adressen der Empfänger (Rᵢ, Rⱼ, Rₗ, Rₘ) einer bestimmten zu steuernden Zone (Z₁, Z₂) gleich bei ihrer Anordnung gemäss einer vorgegebenen festen Ordnung und endgültig verschieden kodiert sind,
- die Sendevorrichtungen (E₁, E₂, 70) jeweils erste Mittel (18) zur Kodierung der Empfängeradressen der entsprechenden zu steuernden Zone aufweisen.

2. Fernsteuerung nach Anspruch 1,
dadurch gekennzeichnet, dass die Sendevorrichtungen jeweils aus einem oder mehreren, den Empfängern (Rᵢ, Rⱼ, Rₗ, Rₘ) der zu steuernden Zone (Z₁, Z₂) zugeordneten und mit besagten ersten Kodiermitteln (18) versehenen lokalen Sendern (E₁, E₂) bestehen und jeder lokale Sender durch das Steuerorgan (11) betätigt wird und ein Übertragungssignal abgibt, das von den Empfängern der jeweiligen zu steuernden Zone erfasst werden kann.

3. Fernsteuerung nach Anspruch 2,
dadurch gekennzeichnet, dass die ersten Kodiermittel (18) eines jeden lokalen Senders (E₁, E₂) einerseits die Kodierung der Adresse des ersten Empfängers (Rᵢ, Rₗ) der zu steuernden Zone (Z₁, Z₂ ) vornehmen und andererseits die Kodierung der Adresse des letzten Empfängers (Rⱼ, Rₘ) der besagten Zone (Z₁, Z₂).

4. Fernsteuerung nach einem der Ansprüche 2 oder 3,
dadurch gekennzeichnet,dass die Adressen der Empfänger (Rᵢ, Rⱼ, Rₗ, Rₘ) aufeinanderfolgend in einer bestimmten zu steuernden Zone und in jeder einzelnen der verschiedenen Zonen kodiert werden.

5. Fernsteuerung nach Anspruch 1,
dadurch gekennzeichnet, dass die Sendevorrichtungen :
- jeweils einen oder mehrere, den Empfängern (Rᵢ, Rⱼ, Rₗ, Rₘ) der entsprechenden zu steuernden Zone (Z₁, Z₂) zugeordnete und mit zweiten Mitteln (34) zur Kodierung einer empfängereigenen Adresse versehene lokale Sender (E₁, E₂) aufweisen, wobei jeder lokale Sender von einem Steuerorgan (11) betätigt wird und ein erstes Übertragungssignal abgibt,
- und eine gemeinsame, programmierbare, an die Übertragungsleitung (10) angeschlossene Zentraleinheit (70) aufweisen, die allein fähig ist, das erste von jedem lokalen Sender abgegebene Übertragungssignal zu erfassen und zu verarbeiten, wobei besagte Einheit die ersten Kodiermittel (18) enthält,in Form einer Zuordnungstafel für jede Senderadresse und die ihr in der entsprechenden zu steuernden Zone zugeordneten Empfängeradressen, sodass die Einheit ein zweites Übertragungssignal abgibt, welches von den Empfängern der entsprechenden zu steuernden Zone erfasst werden kann.

6. Fernsteuerung nach Anspruch 5,
dadurch gekennzeichnet, dass die zweiten Kodiermittel (34) eines jeden lokalen Senders (E₁, E₂ ) einerseits die Kodierung der Adresse des Senders (E₁, E₂₊) vornehmen und andererseits die Kodierung eines bestimmten, nicht als Empfängeradresse benutzten Wertes.

7. Fernsteuerung nach Anspruch 6, in welcher die lokalen Empfänger (Rᵢ, Rⱼ, Rₗ, Rₘ) alle eine Kodieradresse über Null haben,
dadurch gekennzeichnet, dass der vorbestimmte, in jedem lokalen Sender (E₁, E₂) kodierte Wert gleich Null ist.

8. Fernsteuerung nach einem der Ansprüche 1 bis 7,
dadurch gekennzeichnet, dass die Kodiermittel (15) eines lokalen Empfängers (Rᵢ, Rⱼ, Rₗ, Rₘ) einerseits die Kodierung der Adresse des Empfängers (Rᵢ, Rⱼ, Rₗ, Rₘ) vornehmen und andererseits die Kodierung von mindestens einer zusätzlichen Funktionalität des Empfängers.

## Claims

1. A remote-control system, particularly for lighting, in premises incorporating controllable distribution zones with variable conformations, comprising :
- a transmission line (10) common to all the zones to be controlled (Z₁, Z₂) ;
- a plurality of local receivers (Rᵢ, Rⱼ, Rₗ, Rₘ,) distributed in the zones to be controlled and connected to the transmission line (10), each receiver being equipped with means (15) for coding a proper receiver address and means (26) for controlling user appliances (20, 30, 50, 60), coding of the addresses of the receivers being different from one zone to another ;
- a plurality of transmission devices (E₁, E₂, 70) connected to the transmission line (10) and each controlling the receivers of the same zone to be controlled under the action of a control member (11) connected to each transmission device ;
characterized in that :
- the addresses of the receivers (Rᵢ, Rⱼ, Rₗ, Rₘ) of the same zone to be controlled (Z₁, Z₂) are coded differently with respect to each other in a pre-established fixed order and definitively when positioned ;
- the transmission devices (E₁, E₂, 70) each comprise first means (18) for coding the addresses of the receivers of the corresponding zone to be controlled.

2. The remote-control system as claimed in claim 1,
characterized in that the transmission devices are each formed by one or more locai transmitters (E₁, E₂, associated with the receivers (Rᵢ, Rⱼ, Rₗ, Rₘ) of the corresponding zone to be controlled (Z₁, Z₂) and equipped with said first coding means (18), eacn local transmitter being actuated by the control member (11) and delivering a transmission signal capable of being detected by the receivers of the corresponding zone to be controlled.

3. The remote-control system as claimed in claim 2,
characterized in that said first coding means (18) belonging to each local transmitter (E₁, E₂) provide ccding of the address of the first receiver (Rᵢ, Rⱼ) of the corresponding zcne to be controlled (Z₁, Z₂) and coding of the address of the last receiver (Rⱼ, Rₘ) of said zone (Z₁, Z₂).

4. The remote-control system as claimed in one of claims 2 or 3,
characterized in that the addresses of the receivers (Rᵢ, Rⱼ, Rₗ, Rₘ) are coded consecutively in the same zone to be controlled and from one zone to another.

5. The remote-control system as claimed in claim 1,
characterized in that said transmission devices :
- each comprise one or more local transmitters (E₁, E₂) associated with the receivers (Rᵢ, Rⱼ, Rₗ, Rₘ) of the corresponding zone to be controlled (Z₁, Z₂) and equipped with second means (34) for coding a proper transmitter address, each local transmitter being actuated by the control member (11) and delivering a first transmission signal ;
- and have in common one programmable central unit (70) connected to the transmission line (10) and alone able to detect and process the first transmission signal delivered by each locai transmitter, this unit comprising said first coding means (18) in the form of a table of correspondence between each transmitter address and the addresses of the receivers which are associated therewith in the corresponding zone to be controlled, so that the unit delivers a second transmission signal able to be detected by the receivers of the corresponding zone to be controlled.

6. The remote-control system as claimed in claim 5,
characterized in that said second coding means (34) belonging to each local transmitter (E₁, E₂) provide both coding of the address of the transmitter (E₁, E₂) and coding of a predetermined value not used as receiver address.

7. The remote-control system as claimed in claim 6,
in which the local receivers (Rᵢ, Rⱼ, Rₗ, Rₘ) all have a coded address greater than zero,
characterized in that said predetermined coded value in each local transmitter (E₁, E₂) is equal to zero.

8. The remote-control system as claimed in one of claims 1 to 7,
characterized in that said coding means (15) belonging to each local receiver (Rᵢ, Rⱼ, Rₗ, Rₘ) provide coding of the address of the receiver (Rᵢ, Rⱼ, Rₗ, Rₘ) and coding of at least one complementary functionality of the receiver.
